# EUROPEAN PATENT APPLICATION

(11) **EP 3 968 225 A1**
(43) Date of publication of application: **16.03.2022**
(21) Application number: 19927974.6
(22) Date of filing: 06.05.2019
(51) Int. Cl.: G06K 15/00

(54) **NEIGHBOR RELATIONSHIP-BASED ELECTRONIC PRICE TAG POSITIONING METHOD AND DEVICE**

(71) Applicant: Hanshow Technology Co., Ltd., Jiaxing, Zhejiang 314031 (CN)
(72) Inventor: HOU, Shiguo, Jiaxing, Zhejiang 314000 (CN); LIANG, Min, Jiaxing, Zhejiang 314000 (CN); JI, Yaping, Jiaxing, Zhejiang 314000 (CN); WANG, Qingfang, Jiaxing, Zhejiang 314000 (CN); JIANG, Chunle, Jiaxing, Zhejiang 314000 (CN)
(74) Representative: Boult Wade Tennant LLP
(86) International application number: PCT/CN2019/085660
(87) International publication number: WO 2020/223869

(57) **Abstract**

A method and device for positioning an electronic price tag based on a neighbor relationship, comprising: obtaining a plurality of electronic price tag reports, wherein each electronic price tag report includes an identity of a neighbor electronic price tag or an anchor point received by the electronic price tag and a weight of the neighbor electronic price tag received within a limited time slice, and the position of the anchor point is known; determining connection relationships between the electronic price tag to be positioned and all anchor points based on the plurality of electronic price tag reports; determining path values between the electronic price tag to be positioned and each anchor point respectively based on the connection relationships, and sorting the path values from small to large to obtain first two path values in order; and determining the position of the electronic price tag to be positioned based on the two path values and coordinate information of two anchor points respectively corresponding to the two path values. This solution can improve the positioning accuracy of electronic price tag.

## Description

### TECHNICAL FIELD

The present disclosure relates to the technical field of positioning, and in particular to a method and a device for positioning an electronic price tag based on a neighbor relationship.

### BACKGROUND

The traditional electronic price tag system mainly achieves a function of displaying goods price, and pushes information that needs to be displayed from a core system to an electronic price tag terminal for display. As the supermarket has such business requirements as real-time search for goods, shopping guides and the like, how to position the goods in the supermarket is a topic. Traditional indoor positioning methods include iBeacon (which is a new function equipped with the OS of mobile devices released by Apple Inc. The working mode of iBeacon is that a device equipped with a BLE (Bluetooth Low Energy) wireless communication function uses a BLE technology to send its own unique ID to the surrounding areas, and an application software that receives the ID will take some actions based on the ID), UWB (Ultra Wideband, which is a carrierless communication technology that uses nanosecond to picosecond non-sine wave narrow pulses to transmit data, and which is used in a short-distance high-speed data transmission), WiFi fingerprints, etc. The positioning accuracies of these methods are all above 1 m, and even the errors thereof reach 10 m, which cannot meet the requirements of dense commodity display positioning.

### SUMMARY

Embodiments of the present disclosure provide a method and a device for positioning an electronic price tag based on a neighbor relationship, which solve the technical problem of low positioning accuracy caused by the positioning approaches in the prior art.

The method for positioning an electronic price tag based on a neighbor relationship comprises:
obtaining a plurality of electronic price tag reports, wherein each electronic price tag report includes an identity of a neighbor electronic price tag or an anchor point received by the electronic price tag and a weight of the neighbor electronic price tag received within a limited time slice, and wherein the position of the anchor point is known;
determining connection relationships between the electronic price tag to be positioned and all anchor points based on the plurality of electronic price tag reports;
determining path values between the electronic price tag to be positioned and each anchor point respectively based on the connection relationships, and sorting the path values from small to large to obtain first two path values in order; and
determining the position of the electronic price tag to be positioned based on the two path values and coordinate information of two anchor points respectively corresponding to the two path values.

The device for positioning an electronic price tag based on a neighbor relationship comprises:
an electronic price tag report obtaining module for obtaining a plurality of electronic price tag reports, wherein each electronic price tag report includes an identity of a neighbor electronic price tag or an anchor point received by the electronic price tag and a weight of the neighbor electronic price tag received within a limited time slice, and wherein the position of the anchor point is known;
a connection relationship determining module for determining connection relationships between the electronic price tag to be positioned and all anchor points based on the plurality of electronic price tag reports;
a path value determining module for determining path values between the electronic price tag to be positioned and each anchor point respectively based on the connection relationships, and sorting the path values from small to large to obtain first two path values in order; and
an electronic price tag position module for determining the position of the electronic price tag to be positioned based on the two path values and coordinate information of two anchor points respectively corresponding to the two path values.

The embodiments of the present disclosure further provide a computer apparatus comprising a memory, a processor and a computer program stored in the memory and executable by the processor, wherein the processor, when executing the computer program, implements the method for positioning an electronic price tag based on a neighbor relationship as described above.

The embodiments of the present disclosure further provide a computer readable storage medium storing thereon a computer program for executing the method for positioning an electronic price tag based on a neighbor relationship as described above.

In the embodiments of the present disclosure, the connection relationships between the electronic price tag to be positioned and all anchor points are determined based on the plurality of electronic price tag reports obtained; the path values between the electronic price tag to be positioned and each anchor point are determined respectively based on the connection relationships, and the path values are sorted from small to large to obtain first two path values in order; the position of the electronic price tag to be positioned is determined based on the two path values and coordinate information of two anchor points respectively corresponding to the two path values, wherein each electronic price tag report includes an identity of a neighbor electronic price tag or an anchor point received by the electronic price tag and a weight of the neighbor electronic price tag received within a limited time slice, and the position of the anchor point is known. Compared with the existing positioning approach, the present disclosure determines the position of the electronic price tag whose position is unknown by using the neighbor relationship between the electronic price tags and the anchor point whose position is known, which can improve the positioning accuracy.

### BRIEF DESCRIPTION OF DRAWINGS

In order to describe the technical solutions of the embodiments in the present disclosure or the prior art more clearly, the accompanying drawings for the embodiments or the prior art will be briefly introduced in the following. It is apparent that the accompanying drawings described in the following involve merely some embodiments provided in this disclosure, and those skilled in the art can derive other drawings from these accompanying drawings without creative efforts.
FIG. 1 is a flow chart (I) of a method for positioning an electronic price tag based on a neighbor relationship according to an embodiment of the present disclosure;
FIG. 2 is a flow chart (II) of a method for positioning an electronic price tag based on a neighbor relationship according to an embodiment of the present disclosure;
FIG. 3 is a block diagram (I) showing the structure of a device for positioning an electronic price tag based on a neighbor relationship according to an embodiment of the present disclosure; and
FIG. 4 is a block diagram (II) showing the structure of a device for positioning an electronic price tag based on a neighbor relationship according to an embodiment of the present disclosure.

### DESCRIPTION OF EMBODIMENTS

The technical solutions of the embodiments in the present disclosure will be clearly and comprehensively described in the following with reference to the accompanying drawings. It is apparent that the embodiments as described are merely some, rather than all, of the embodiments of the present disclosure. All other embodiments obtained by those skilled in the art based on one or more embodiments described in the present disclosure without creative efforts should fall within the scope of this disclosure.

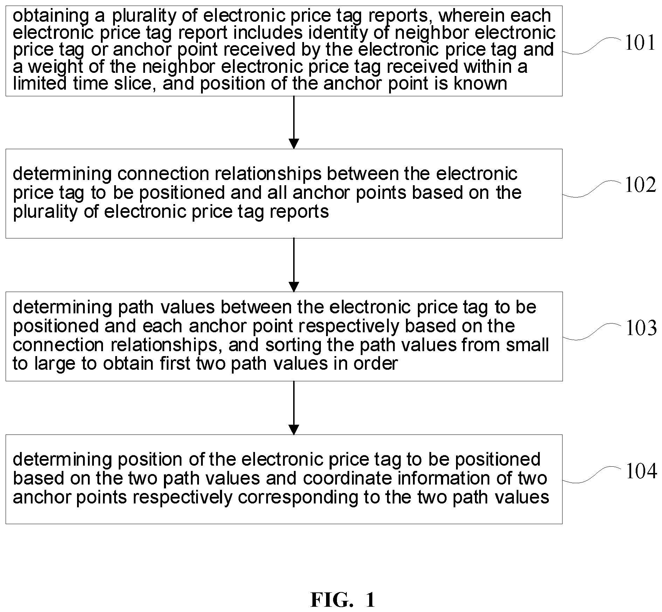

In an embodiment of the present disclosure, a method for positioning an electronic price tag based on a neighbor relationship is provided. As shown in FIG. 1, the method comprises:
a step 101 of obtaining a plurality of electronic price tag reports, wherein each electronic price tag report includes an identity of a neighbor electronic price tag or an anchor point received by the electronic price tag and a weight of the neighbor electronic price tag received within a limited time slice (i.e., the number of times the identity neighbor is received within a limited time slice), and the position of the anchor point is known;
a step 102 of determining connection relationships between the electronic price tag to be positioned and all anchor points based on the plurality of electronic price tag reports;
a step 103 of determining path values between the electronic price tag to be positioned and each anchor point respectively based on the connection relationships, and sorting the path values from small to large to obtain first two path values in order; and
a step 104 of determining the position of the electronic price tag to be positioned based on the two path values and coordinate information of two anchor points respectively corresponding to the two path values.

In an embodiment of the present disclosure, the anchor points send their own identities to adjacent electronic price tags simultaneously according to the time slice specified by the protocol, so the electronic price tag may receive an identity of an anchor point directly, then what included in the report is the identity of the anchor point.

In an embodiment of the present disclosure, the connection relationships between the electronic price tag to be positioned and an anchor point may be determined by connecting to the anchor point after bridging through a plurality of neighbor relationships. Then determining path values between the electronic price tag to be positioned and each anchor point respectively comprises:
determining a path value between two adjacent electronic price tags, wherein the path value between the two adjacent electronic price tags is the value of the smallest path among all connection modes between the two adjacent electronic price tags; and
adding all path values between any two adjacent electronic price tags and a path value between an electronic price tag connected with an anchor point and the anchor point, to obtain a path value between the electronic price tag to be positioned and the anchor point,
wherein the path value between two adjacent electronic price tags = 1/ (a weight of a second electronic price tag B received by a first electronic price tag A + a weight of the first electronic price tag A received by the second electronic price tag B). Note that these two directions are not perfectly symmetrical, so the weights need to be added together. A larger weight corresponds to a closer distance between the two.

In the process of establishing the connection relationship, the length of the path is gradually accumulated. For example, if the neighbors of the electronic price tag A include B, the neighbors of B include C, and the neighbors of C include anchor point D, then A can reach C through B and finally reach D. Then the total path length = path AB + path BC + path CD. Note that each sub-path may also include multiple paths, and the path value represents the shortest path of all possible paths. For example, for the path BC, there may be a direct path value of 1.2 for B→C, while there may also be a path value of 1 for β→E→C, then the final path value for BC is 1.

In an embodiment of the present disclosure, the step 104 comprises:
calculating a weighted average of the two path values; and
determining the position of the electronic price tag to be positioned based on the weighted average and the coordinate information of the two anchor points respectively corresponding to the two path values.

For example, if a path value between the electronic price tag A and the anchor point D is 3 and a path value between the electronic price tag A and the anchor point E is 3, then the weighted average of the path value between the electronic price tag A and the anchor point D and the path value between the electronic price tag A and the anchor point E is calculated as 3/(3+3)=1/2. Then, the position of electronic price tag A is calculated as {(x1+x2)/2, (y1+ y2)/2} based on 1/2, coordinate information (x1, y1) of the anchor point D and coordinate information (x2, y2) of the anchor point E.

In an embodiment of the present disclosure, because the electronic price tag send its own identity in different time slices using different transmit powers and a smaller transmit power corresponds to an earlier time slice, the reports of each electronic price tag can be divided into several different grades, and the different report grades actually correspond to the neighbor identities and weights obtained under different power conditions.

Specifically, each electronic price tag report further includes a transmit power corresponding to the limited time slice.

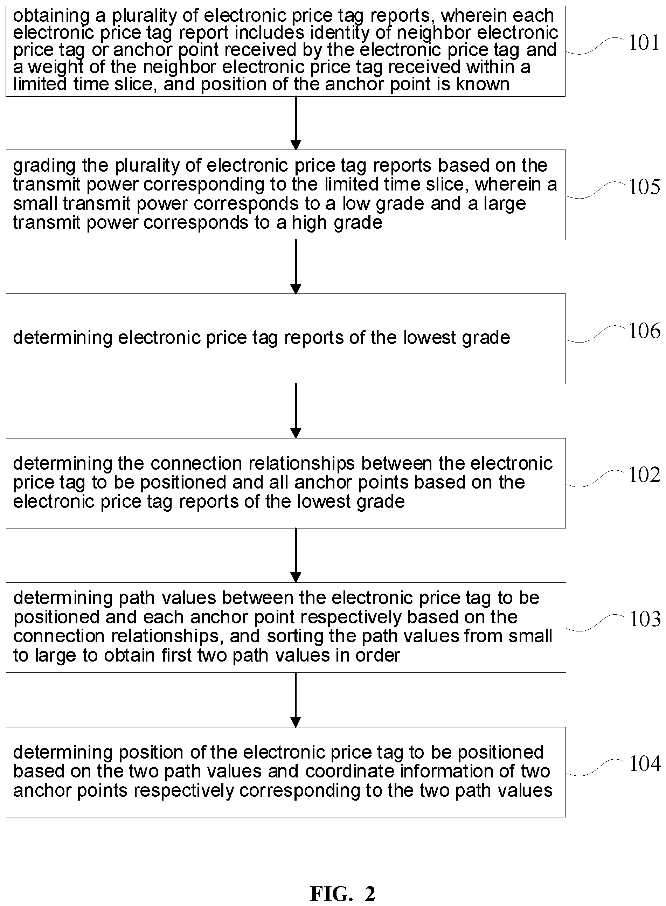

As shown in FIG. 2, the method for positioning an electronic price tag based on a neighbor relationship may further comprise:
a step 105 of grading the plurality of electronic price tag reports based on the transmit power corresponding to the limited time slice, wherein a small transmit power corresponds to a low grade and a large transmit power corresponds to a high grade; and
a step 106 of determining electronic price tag reports of the lowest grade,
wherein the step 102 of determining connection relationships between the electronic price tag to be positioned and all anchor points based on the plurality of electronic price tag reports may further comprise:
determining the connection relationships between the electronic price tag to be positioned and all anchor points based on the electronic price tag reports of the lowest grade.

The above process is to determine the position of the electronic price tag with a lower power grade. If positions of certain electronic price tags are not obtained with the lower power grade, it is necessary to re-determine the possible path for the electronic price tag to connect to the anchor point based on the reports of a higher power grade, so as to calculate the position. Specifically, the process is as follows:
determining electronic price tag reports of the second lowest grade if the position of the electronic price tag to be positioned cannot be determined based on the electronic price tag reports of the lowest grade;
obtaining a result report (i.e., the result of positioning at this grade) of determination of the connection relationships between the electronic price tag to be positioned and all anchor points based on the electronic price tag reports of the lowest grade; and
determining the connection relationships between the electronic price tag to be positioned and all anchor points based on the result report and the electronic price tag reports of the second lowest grade (i.e., combine the two).

The position is then obtained through the steps 102 to 104 described above.

Based on the same inventive concept, the present disclosure further provides a device for positioning an electronic price tag based on a neighbor relationship, as described in the following embodiment. Since the principle of the device for positioning an electronic price tag based on a neighbor relationship to solve the problem is similar to that of the method for positioning an electronic price tag based on a neighbor relationship, implementation of the device for positioning an electronic price tag based on a neighbor relationship can be referred to the implementation of the method for positioning an electronic price tag based on a neighbor relationship, and detailed description will be omitted. As used below, the term "unit" or "module" can realize a combination of software and/or hardware with predetermined functions. Although preferably the device described in the above embodiments is implemented by software, implementation by hardware or a combination of software and hardware is also possible and conceivable.

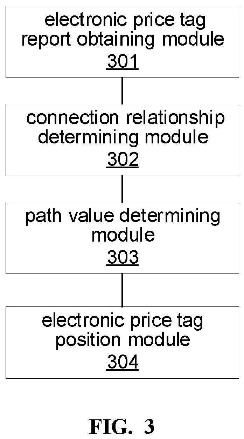

FIG. 3 is a block diagram (I) showing the structure of a device for positioning an electronic price tag based on a neighbor relationship according to an embodiment of the present disclosure. As shown in FIG. 3, the device comprises:
an electronic price tag report obtaining module 301 for obtaining a plurality of electronic price tag reports, wherein each electronic price tag report includes an identity of a neighbor electronic price tag or an anchor point received by the electronic price tag and a weight of the neighbor electronic price tag received within a limited time slice, and wherein the position of the anchor point is known;
a connection relationship determining module 302 for determining connection relationships between the electronic price tag to be positioned and all anchor points based on the plurality of electronic price tag reports;
a path value determining module 303 for determining path values between the electronic price tag to be positioned and each anchor point respectively based on the connection relationships, and sorting the path values from small to large to obtain first two path values in order; and
an electronic price tag position module 304 for determining the position of the electronic price tag to be positioned based on the two path values and coordinate information of two anchor points respectively corresponding to the two path values.

In an embodiment of the present disclosure, the path value determining module 303 is configured to:
determine a path value between two adjacent electronic price tags if the connection relationships are obtained after bridging through a plurality of neighbor electronic price tags, wherein the path value between the two adjacent electronic price tags is the value of the smallest path among all connection modes between the two adjacent electronic price tags; and
add all path values between any two adjacent electronic price tags and a path value between an electronic price tag connected with an anchor point and the anchor point, to obtain a path value between the electronic price tag to be positioned and the anchor point.

In an embodiment of the present disclosure, the path value determining module 303 is configured to:
determine the path value between two adjacent electronic price tags as follows:
the path value between two adjacent electronic price tags = 1/ (a weight of a second electronic price tag received by a first electronic price tag + a weight of the first electronic price tag received by the second electronic price tag).

In an embodiment of the present disclosure, the electronic price tag position module 304 is configured to:
calculate a weighted average of the two path values; and
determine the position of the electronic price tag to be positioned based on the weighted average and the coordinate information of the two anchor points respectively corresponding to the two path values.

In an embodiment of the present disclosure, each electronic price tag report further includes a transmit power corresponding to the limited time slice.

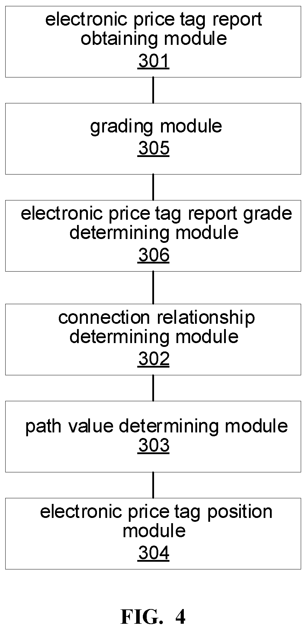

As shown in FIG. 4, the device for positioning an electronic price tag based on a neighbor relationship further comprises:
a grading module 305 for grading the plurality of electronic price tag reports based on the transmit power corresponding to the limited time slice, wherein a small transmit power corresponds to a low grade and a large transmit power corresponds to a high grade; and
an electronic price tag report grade determining module 306 for determining electronic price tag reports of the lowest grade;
wherein the connection relationship determining module 302 is configured to:
determining the connection relationships between the electronic price tag to be positioned and all anchor points based on the electronic price tag reports of the lowest grade.

In an embodiment of the present disclosure, the electronic price tag report grade determining module 306 is further configured to:
determine electronic price tag reports of the second lowest grade if the position of the electronic price tag to be positioned cannot be determined based on the electronic price tag reports of the lowest grade;
wherein the connection relationship determining module 302 is further configured to:
   obtain a result report of determination of the connection relationships between the electronic price tag to be positioned and all anchor points based on the electronic price tag reports of the lowest grade; and
   determine the connection relationships between the electronic price tag to be positioned and all anchor points based on the result report and the electronic price tag reports of the second lowest grade.

An embodiment of the present disclosure further provides a computer apparatus comprising a memory, a processor and a computer program stored in the memory and executable by the processor, wherein the processor, when executing the computer program, implements the method for positioning an electronic price tag based on a neighbor relationship as described above.

An embodiment of the present disclosure further provides a computer readable storage medium storing thereon a computer program for executing the method for positioning an electronic price tag based on a neighbor relationship as described above.

In conclusion, the method and the device for positioning an electronic price tag based on a neighbor relationship proposed by the present disclosure have the following beneficial effects.

The connection relationships between the electronic price tag to be positioned and all anchor points are determined based on the plurality of electronic price tag reports obtained; the path values between the electronic price tag to be positioned and each anchor point are determined respectively based on the connection relationships, and the path values are sorted from small to large to obtain first two path values in order; the position of the electronic price tag to be positioned is determined based on the two path values and coordinate information of two anchor points respectively corresponding to the two path values, wherein each electronic price tag report includes an identity of a neighbor electronic price tag or an anchor point received by the electronic price tag and a weight of the neighbor electronic price tag received within a limited time slice, and the position of the anchor point is known. Compared with the existing positioning approach, the present disclosure determines the position of the electronic price tag whose position is unknown by using the neighbor relationship between the electronic price tags and the anchor point whose position is known, which can improve the positioning accuracy.

Those skilled in the art should understand that the embodiments of the present disclosure can be provided as a method, a system, or a computer program product. Therefore, the embodiments of the present disclosure may be implemented in a form of an absolute hardware embodiment, an absolute software embodiment, or an embodiment combining software and hardware. Moreover, the embodiments of the present disclosure can be in the form of a computer program product implemented on one or more computer usable storage medium (including, but not limited to, a magnetic disk memory, a CD-ROM, an optical memory and the like) including computer program codes.

The present disclosure has been described with reference to flowcharts and/or block diagrams of the method, apparatus (system) and computer program product of the embodiments in this disclosure. It should be understood that each process and/or block in the flowcharts and/or block diagrams and combinations of processes and/or blocks in the flowcharts and/or block diagrams can be implemented by computer program instructions. The computer program instructions may be provided to a general-purpose computer, a special-purpose computer, an embedded processor or a processor of other programmable data processing devices to form a machine, so that instructions executed by the computer or the processor of other programmable data processing devices form an device configured to implement functions designated in one or more processes in a flowchart and/or one or more blocks in a block diagram.

The computer program instructions may also be stored in a computer readable memory which can guide the computer or other programmable data processing devices to operate in a specific manner, so that the instruction stored in the computer readable memory forms an article of manufacture comprising therein an instructing device, which implements functions designated in one or more processes in a flowchart and/or one or more blocks in a block diagram.

The computer program instructions may also be loaded onto a computer or other programmable data processing devices, so that a series of operational steps are performed on the computer or other programmable devices to form a computer implemented process, and therefore, the instructions executed in the computer or other programmable devices provide steps for implementing functions designated in one or more processes in a flowchart and/or one or more blocks in a block diagram.

The above descriptions involve merely some embodiments of the present disclosure, and are not intended to limit the present disclosure. Various modifications and variations may be made to the embodiments of the present disclosure by those skilled in the art. Any modifications, equivalents, improvements, and the like made within the spirit and principle of the present disclosure shall fall within the scope of the appended claims.

## Claims

1. A method for positioning an electronic price tag based on a neighbor relationship, comprising:
obtaining a plurality of electronic price tag reports, wherein each electronic price tag report includes an identity of a neighbor electronic price tag or an anchor point received by the electronic price tag and a weight of the neighbor electronic price tag received within a limited time slice, and wherein position of the anchor point is known;
determining connection relationships between the electronic price tag to be positioned and all anchor points based on the plurality of electronic price tag reports;
determining path values between the electronic price tag to be positioned and each anchor point respectively based on the connection relationships, and sorting the path values from small to large to obtain first two path values in order; and
determining position of the electronic price tag to be positioned based on the two path values and coordinate information of two anchor points respectively corresponding to the two path values.

2. The method for positioning an electronic price tag based on a neighbor relationship according to claim 1, wherein determining path values between the electronic price tag to be positioned and each anchor point respectively based on the connection relationships comprises:
determining a path value between two adjacent electronic price tags if the connection relationships are obtained after bridging through a plurality of neighbor electronic price tags, wherein the path value between the two adjacent electronic price tags is the value of the smallest path among all connection modes between the two adjacent electronic price tags; and
adding all path values between any two adjacent electronic price tags and a path value between an electronic price tag connected with an anchor point and the anchor point, to obtain a path value between the electronic price tag to be positioned and the anchor point.

3. The method for positioning an electronic price tag based on a neighbor relationship according to claim 2, wherein the path value between two adjacent electronic price tags is determined as follows:
the path value between two adjacent electronic price tags = 1/ (a weight of a second electronic price tag received by a first electronic price tag + a weight of the first electronic price tag received by the second electronic price tag).

4. The method for positioning an electronic price tag based on a neighbor relationship according to claim 1, wherein determining the position of the electronic price tag to be positioned based on the two path values and coordinate information of two anchor points respectively corresponding to the two path values comprises:
calculating a weighted average of the two path values; and
determining the position of the electronic price tag to be positioned based on the weighted average and the coordinate information of the two anchor points respectively corresponding to the two path values.

5. The method for positioning an electronic price tag based on a neighbor relationship according to claim 1, wherein each electronic price tag report further includes a transmit power corresponding to the limited time slice,
the method further comprising:
grading the plurality of electronic price tag reports based on the transmit power corresponding to the limited time slice, wherein a small transmit power corresponds to a low grade and a large transmit power corresponds to a high grade; and
determining electronic price tag reports of the lowest grade; wherein
determining connection relationships between the electronic price tag to be positioned and all anchor points based on the plurality of electronic price tag reports comprises:
determining the connection relationships between the electronic price tag to be positioned and all anchor points based on the electronic price tag reports of the lowest grade.

6. The method for positioning an electronic price tag based on a neighbor relationship according to claim 5, further comprising:
determining electronic price tag reports of the second lowest grade if the position of the electronic price tag to be positioned cannot be determined based on the electronic price tag reports of the lowest grade;
obtaining a result report of determination of the connection relationships between the electronic price tag to be positioned and all anchor points based on the electronic price tag reports of the lowest grade; and
determining the connection relationships between the electronic price tag to be positioned and all anchor points based on the result report and the electronic price tag reports of the second lowest grade.

7. A device for positioning an electronic price tag based on a neighbor relationship, comprising:
an electronic price tag report obtaining module for obtaining a plurality of electronic price tag reports, wherein each electronic price tag report includes an identity of a neighbor electronic price tag or an anchor point received by the electronic price tag and a weight of the neighbor electronic price tag received within a limited time slice, and wherein position of the anchor point is known;
a connection relationship determining module for determining connection relationships between the electronic price tag to be positioned and all anchor points based on the plurality of electronic price tag reports;
a path value determining module for determining path values between the electronic price tag to be positioned and each anchor point respectively based on the connection relationships, and sorting the path values from small to large to obtain first two path values in order; and
an electronic price tag position module for determining position of the electronic price tag to be positioned based on the two path values and coordinate information of two anchor points respectively corresponding to the two path values.

8. The device for positioning an electronic price tag based on a neighbor relationship according to claim 7, wherein the path value determining module is configured to:
determine a path value between two adjacent electronic price tags if the connection relationships are obtained after bridging through a plurality of neighbor electronic price tags, wherein the path value between the two adjacent electronic price tags is the value of the smallest path among all connection modes between the two adjacent electronic price tags; and
add all path values between any two adjacent electronic price tags and a path value between an electronic price tag connected with an anchor point and the anchor point, to obtain a path value between the electronic price tag to be positioned and the anchor point.

9. The device for positioning an electronic price tag based on a neighbor relationship according to claim 8, wherein the path value determining module is configured to:
determine the path value between two adjacent electronic price tags as follows:
the path value between two adjacent electronic price tags = 1/ (a weight of a second electronic price tag received by a first electronic price tag + a weight of the first electronic price tag received by the second electronic price tag).

10. The device for positioning an electronic price tag based on a neighbor relationship according to claim 7, wherein the electronic price tag position module is configured to:
calculate a weighted average of the two path values; and
determine the position of the electronic price tag to be positioned based on the weighted average and the coordinate information of the two anchor points respectively corresponding to the two path values.

11. The device for positioning an electronic price tag based on a neighbor relationship according to claim 7, wherein each electronic price tag report further includes a transmit power corresponding to the limited time slice,
the device further comprising:
a grading module for grading the plurality of electronic price tag reports based on the transmit power corresponding to the limited time slice, wherein a small transmit power corresponds to a low grade and a large transmit power corresponds to a high grade; and
an electronic price tag report grade determining module for determining electronic price tag reports of the lowest grade; wherein
the connection relationship determining module is configured to:
determining the connection relationships between the electronic price tag to be positioned and all anchor points based on the electronic price tag reports of the lowest grade.

12. The device for positioning an electronic price tag based on a neighbor relationship according to claim 11, wherein the electronic price tag report grade determining module is further configured to:
determine electronic price tag reports of the second lowest grade if the position of the electronic price tag to be positioned cannot be determined based on the electronic price tag reports of the lowest grade; and wherein
the connection relationship determining module is further configured to:
obtain a result report of determination of the connection relationships between the electronic price tag to be positioned and all anchor points based on the electronic price tag reports of the lowest grade; and
determine the connection relationships between the electronic price tag to be positioned and all anchor points based on the result report and the electronic price tag reports of the second lowest grade.

13. A computer apparatus comprising a memory, a processor and a computer program stored in the memory and executable by the processor, wherein the processor, when executing the computer program, implements the method for positioning an electronic price tag based on a neighbor relationship according to any one of claims 1 to 6.

14. A computer readable storage medium storing thereon a computer program for executing the method for positioning an electronic price tag based on a neighbor relationship according to any one of claims 1 to 6.
